# EUROPÄISCHE PATENTSCHRIFT

(11) **EP 0 380 780 B1**
(45) Veröffentlichungstag und Bekanntmachung des Hinweises auf die Patenterteilung: **04.08.1993**
(21) Anmeldenummer: 89122291.1
(22) Anmeldetag: 02.12.1989
(51) Int. Cl.: F16D 41/08

(54) **Freilauf**
Freewheel
Roue libre

(30) Priorität: 31.01.1989 DE 3902804
(43) Veröffentlichungstag der Anmeldung: 08.08.1990
(73) Patentinhaber: INA Wälzlager Schaeffler KG, 91063 Herzogenaurach (DE)
(72) Erfinder: Ritter, Joachim, Dipl.-Ing. (FH), D-8522 Herzogenaurach (DE); Stark, Johann, Dipl.-Ing. (FH), D-8552 Höchstadt/Aisch (DE)

(56) Entgegenhaltungen:
- EP-A- 0 182 994
- DE-C- 122 942
- DE-C- 587 997
- DE-C- 600 572
- DE-C- 685 181
- FR-A- 2 289 796
- GB-A- 414 617
- GB-A- 418 544
- GB-A- 433 541
- US-A- 1 927 046
- US-A- 2 065 938
- US-A- 2 273 646
- US-A- 3 426 874
- US-A- 4 230 211

## Beschreibung

Die Erfindung betrifft einen Freilauf, bestehend aus einem Klemmring, der Klemmrampen aufweist, und aus in Taschen eines Käfigs untergebrachten federbelasteten Klemmrollen, die den Klemmrampen zugeordnet sind, der durch Verdrehen des Käfigs gegenüber dem Klemmring aus einer ersten in eine zweite Schaltstellung umschaltbar ist.

Ein Freilauf dieser Gattung ist beispielsweise aus der DE-PS 30 02 402 bekannt. Bei diesem Freilauf wird der Käfig durch eine als einfacher Drahtring ausgebildete Feder in eine Schaltstellung gedrückt. An dem Drahtring ist ein Schaltglied ausgebildet, auf welches eine tangential gerichtete Kraft einwirken und dadurch den Käfig in eine zweite Schaltstellung verdrehen kann. Da die für die Verdrehung des Käfigs benötigte Kraft tangential angreifen muß, kann dieser Freilauf nur dort eingesetzt werden, wo die Freilaufhülse mit dem Käfig nicht rotiert.

Dieses Problem ist bei einem weiteren bekannten Freilauf (GB-A 21 50 239) dadurch gelöst, daß die für die Umschaltung benötigte Kraft in axialer Richtung wirkt. Dadurch ist es möglich, eine Umschaltung des Freilaufs auch dann zu bewirken, wenn der Käfig rotiert. Bei diesem bekannten Freilauf ist der die Klemmrollen aufnehmende Käfig mit einer axialen Verlängerung versehen, die an zwei einander diametral gegenüberliegenden Stellen Durchbrüche von im wesentlichen dreieckiger Form aufweist. Die eine Seitenkante des Dreiecks verläuft dabei geneigt zur Freilauflängsachse. In diese Durchbrüche greift ein zum Käfig drehfest, jedoch axial verschieblich gelagerter Bolzen ein, der durch ein Schaltgestänge in axialer Richtung verschoben werden kann. Er legt sich dabei an die zur Freilauflängsachse geneigten Kanten der Durchbrüche am Käfig an und verdreht diesen dadurch bei seiner Längsverschiebung. Der Freilaufkäfig wird dabei von der einen Schaltstellung in eine andere gebracht. Beim erneuten Betätigen, durch welches die erste Schaltstellung wieder erreicht werden soll, hebt der Bolzen von der Schrägfläche des Käfigs ab und dieser muß durch eine zusätzliche Feder in seine ursprüngliche Lage zurückgedreht werden. Dieser bekannte Freilauf ist in seinem konstruktiven Aufbau dadurch recht kompliziert, daß der zum Schalten erforderliche Bolzen, ebenso wie dessen Bedienungsgestänge zusätzliche Bauteile sind, die außerhalb des eigentlichen Freilaufes untergebracht werden müssen. Zum anderen besteht der Nachteil, daß die Rückführung des Käfigs in seine Ausgangsposition ausschließlich durch die Kraft einer Feder erfolgt, so daß, beispielsweise bei Federbruch, eine Umschaltung des Freilaufs nicht mehr möglich ist.

Der Erfindung liegt die Aufgabe zugrunde, einen Freilauf dieser Gattung mit einfachen konstruktiven Mitteln so zu gestalten, daß er als einbaufertige Einheit geliefert werden kann, die bei einwandfreier Funktionsfähigkeit sehr preisgünstig hergestellt werden kann und zu deren Betätigung lediglich noch ein äußeres, einfaches Schaltglied, beispielsweise in Form eines längsverschieblichen Ringes vorgesehen werden muß.

Diese Aufgabe löst die Erfindung dadurch, daß einerseits der Käfig unmittelbar oder unter Einschaltung eines Zwischenglieds und andererseits der Klemmring mit Vorsprüngen und Ausnehmungen derart gewindeartig ineinandergreifen, daß beim axialen Verschieben des Käfigs bzw. des Zwischenglieds der Käfig eine Rotationsbewegung gegenüber dem Klemmring ausführt. Dabei kann der Käfig in dem Klemmring, der an beiden Enden radial gerichtete Borde besitzt, axial verschieblich gelagert sein, wobei zwischen dem einen Klemmringbord und einer Käfigstirnfläche eine axial wirkende Druckfeder angeordnet ist, während an der gegenüberliegenden Seite ein axialer Ansatz des Käfigs, der axial über den Klemmring hinausragt, Ausnehmungen oder Vorsprünge aufweist, die mit Vorsprüngen oder Ausnehmungen am Klemmring gewindeartig zusammenwirken. Bei einer solchen Ausbildung ist es somit nur erforderlich, einen axialen Druck auf den Ansatz des Käfigs auszuüben, um dessen Verdrehen in eine zweite Schaltstellung zu bewirken. Läßt man anschließend diese Druckkraft nicht mehr wirken, so wird der Käfig durch die eingeschaltete Druckfeder wieder in seine erste Schaltstellung zurückgedreht. Falls Bedenken bestehen, daß die Druckfeder brechen könnte, und damit eine Rückführung in die erste Schaltstellung nicht mehr möglich wäre, so könnte man dies problemlos dadurch vermeiden, daß man das äußere Schaltglied derart formschlüssig in den axialen Ansatz des Käfigs eingreifen läßt, daß das Schaltglied den Käfig nicht nur aus einer ersten Schaltstellung in eine zweite drücken, sondern ihn auch bei einer Rückwärtsbewegung wiederum in die erste Schaltstellung zurückziehen könnte.

Konkret könnte eine solche Konstruktion so ausgeführt sein, daß der Ansatz des Käfigs mit wenigstens einem gewindeförmigen Vorsprung, z. B. in Form einer radial vorstehenden Leiste versehen ist, welcher in eine Ausnehmung des der Druckfeder entgegengesetzten Klemmringbordes formschlüssig eingreift. Um das Ziel der Erfindung zu erreichen, sind bei dieser Ausführung außer der eingesetzten Druckfeder gegenüber einem nicht schaltbaren Freilauf keine zusätzlichen Teile erforderlich. Es müssen lediglich bereits vorhandene Teile, nämlich der Käfig einerseits und der Klemmring andererseits eine spezielle Ausbildung erhalten, durch die das Verdrehen des Käfigs gegenüber dem Klemmring erreicht wird.

Während bei der bisher beschriebenen Ausführung der Käfig während des Umschaltens axial verschoben wird, ist nach der Erfindung auch eine andere Ausführung möglich, bei welcher der Käfig nicht axial verschoben werden muß. Dies wird dadurch erreicht, daß der Käfig in dem Klemmring zwischen radial gerichteten Borden an beiden Enden axial unverschieblich gelagert ist, zwischen Käfig und Klemmring ein vorzugsweise zylindrisches, axial verschieblich gelagertes und unter Einwirkung einer Druckfeder axial nach außen gedrücktes Zwischenglied angeordnet ist, welches axial über den Klemmring hinausragt, wobei der Käfig und das Zwischenglied einerseits und das Zwischenglied und der Klemmring andererseits derart einerseits gewindeartig und andererseits im Sinne einer Längsführung ineinandergreifen, daß beim axialen Verschieben des Zwischenglieds der Käfig eine Rotationsbewegung gegenüber dem Klemmring ausführt. In einer konkreten Ausführungsform kann ein axialer Ansatz des Käfigs mit wenigstens einem gewindeförmigen Vorsprung versehen sein, welcher in eine entsprechende Nut des Zwischenglieds eingreift, welches andererseits mit wenigstens einer axial verlaufenden Nut versehen ist, in welche ein Vorsprung eines Klemmringbordes formschlüssig eingreift. Wenn bei dieser Ausführung eine axial wirkende Druckkraft auf das axial über den Klemmring hinausragende Ende des Zwischenglieds ausgeübt wird, verschiebt sich dieses dabei lediglich axial, ohne gegenüber dem Klemmring eine Rotationsbewegung auszuführen. Bei dieser Axialverschiebung bewirkt es jedoch gleichzeitig durch die gewindeartig ineinander eingreifenden Vorsprünge und Ausnehmungen eine reine Rotationsbewegung des Käfigs, ohne daß dieser axial verschoben wird.

In den Zeichnungen sind zwei Ausführungsbeispiele der Erfindung dargestellt. Es zeigen:
- Figur 1 und 3: Halb-Längsschnitte durch zwei unterschiedliche Ausführungsformen von Freiläufen,
- Figur 2: eine Ansicht in Richtung des Pfeiles II nach Figur 1 und
- Figur 4: einen Schnitt nach Linie IV-IV der Figur 3.

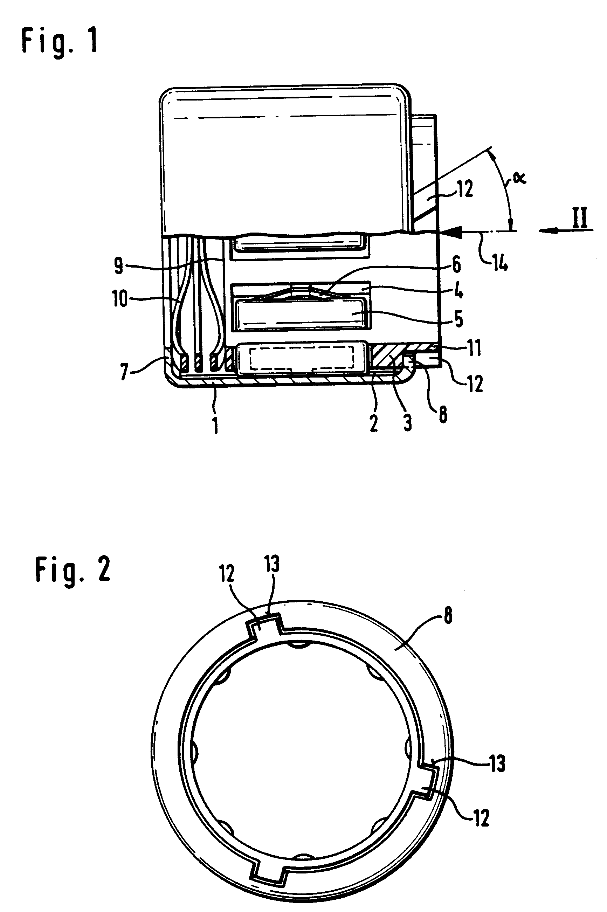

Der in den Figuren 1 und 2 dargestellte Freilauf besteht aus dem Klemmring 1, der in seiner Bohrung Klemmrampen 2 aufweist und er besitzt einen Käfig 3, in dessen Taschen 4 Klemmrollen 5 untergebracht sind, die unter der Einwirkung von Federn 6 stehen. Der Klemmring 1 weist an beiden axialen Enden radial nach innen gerichtete Borde 7 und 8 auf. Zwischen dem Bord 7 einerseits und der Käfigstirnfläche 9 andererseits ist eine Druckfeder 10 angeordnet, die im dargestellten Beispiel aus zwei Wellfedern besteht, die durch eine Zwischenscheibe voneinander getrennt sind.

Der Käfig 3 ist an seinem einen Ende mit einem axialen Ansatz 11 versehen, welcher an einigen Umfangsstellen gewindeförmige Vorsprünge 12 aufweist, die unter einem Winkel α zur Längsachse geneigt sind und die in entsprechende Ausnehmungen 13 des Bordes 8 eingreifen. Wenn man annimmt, daß der Käfig in der dargestellten Situation so ausgelegt wäre, daß er eine eingesetzte, nicht dargestellte Welle in einer Drehrichtung frei rotieren ließe, während er in der Gegenrichtung klemmen würde, so wäre es möglich, durch Einwirkung einer Kraft in Richtung des Pfeiles 14 den Käfig 3 axial nach links zu verschieben, wobei er gleichzeitig eine Verdrehung erfährt, so daß dadurch eine zweite Schaltstellung erreicht wird, in welcher eine eingesetzte Welle z. B. in beiden Drehrichtungen frei rotieren könnte.

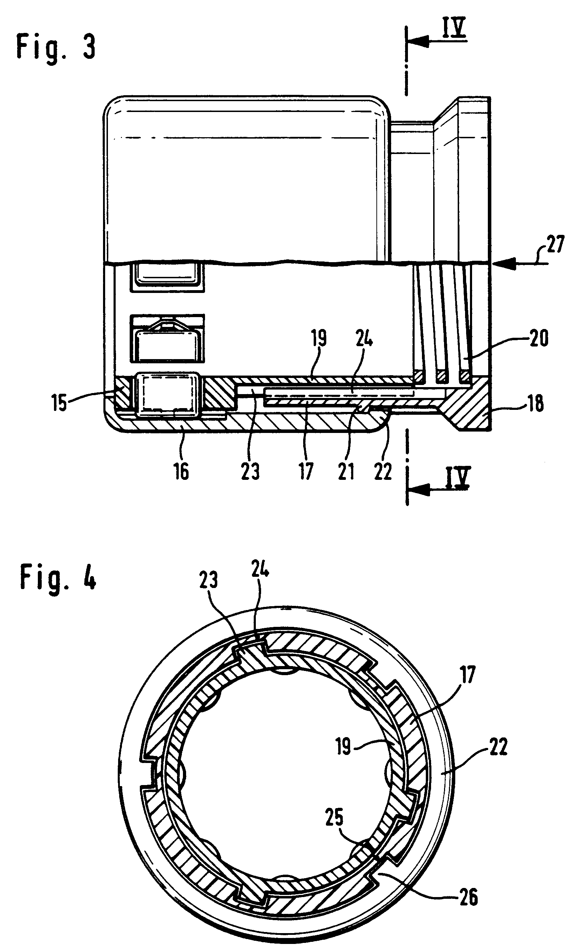

Die in den Figuren 3 und 4 dargestellte Ausführungsform unterscheidet sich von der vorhergehenden zunächst dadurch, daß der Käfig 15 bei der Betätigung nicht axial verschoben wird. Im Unterschied zu der vorher beschriebenen Ausführung ist in diesem Falle zwischen dem Käfig 15 einerseits und dem Klemmring 16 andererseits ein Zwischenglied 17 vorgesehen, welches als zylindrische Hülse ausgeführt ist, die an ihrem einen Ende über den Klemmring 16 axial hinausragt und dort einen Anlaufbund 18 aufweist. Zwischen dem axialen Ansatz 19 des Käfigs 15 einerseits und einem Absatz in dem Anlaufbund 18 ist eine axial wirkende Druckfeder 20 eingeschaltet. Um zu verhindern, daß durch diese Druckfeder das Zwischenglied 17 völlig aus dem Klemmring 16 herausgedrückt wird, ist an dem Zwischenglied 17 eine Nase 21 vorgesehen, die sich an dem Klemmringbord 22 abstützt.

Der axiale Ansatz 19 trägt an einigen Umfangsstellen gewindeförmige Vorsprünge 23, die in entsprechende Nuten 24 des Zwischengliedes 17 eingreifen. Andererseits ist das Zwischenglied 17 an mehreren Umfangsstellen mit axial verlaufenden Nuten 25 versehen, in welche Vorsprünge 26 des Klemmringbordes 22 eingreifen.

Wird in diesem Falle eine axial in Richtung des Pfeiles 27 wirkende Kraft auf den Anlaufbund 18 des Zwischengliedes 17 ausgeübt, so wird sich dieses Zwischenglied axial in den Klemmring 16 hineinbewegen und dabei wegen des Ineinandergreif ens der Vorsprünge 23 und Nuten 24 dem Käfig eine Rotationsbewegung vermitteln, durch die ein Umschalten aus der ursprünglichen Schaltstellung in eine weitere Schaltstellung bewirkt wird.

Die Erfindung kann auch bei solchen bekannten Freiläufen angewandt werden, bei denen die Klemmrampen so ausgebildet sind, daß ausgehend von einer Käfigstellung, bei welcher der Freilauf in einer Drehrichtung klemmt, durch Verdrehen des Käfigs eine Mittelstellung erreicht wird, in welcher der Freilauf in keiner der beiden Drehrichtungen klemmt und durch weiteres Verdrehen des Käfigs schließlich eine Schaltstellung erreicht wird, in welcher er in der gegenüber der ersten Schaltstellung entgegengesetzten Richtung klemmt.

## Patentansprüche

1. Freilauf, bestehend aus einem Klemmring (1), der Klemmrampen (2) aufweist und aus in Taschen (4) eines Käfigs (3) untergebrachten federbelasteten Klemmrollen (5), die den Klemmrampen (2) zugeordnet sind, der durch relatives Verdrehen zwischen dem Käfig (3) und dem Klemmring (1) aus einer ersten in eine zweite Schaltstellung umschaltbar ist, wobei durch eine axiale Verschiebung eines gewindeartige eingreifenden Schaltgliedes eine Rotationsbewegung zwischen dem Käfig und dem Klemmring erzeugt wird, **dadurch gekennzeichnet**, daß der Käfig (3) und der Klemmring (1) mit Vorsprüngen (12) und Ausnehmungen (13) unmittelbar ineinandergreifen, und daß bei einer Axialverschiebung des Käfigs (3), dieser eine Rotationsbewegung gegenüber dem Klemmring (1) ausführt.

2. Freilauf, bestehend aus einem Klemmring (16), der Klemmrampen aufweist und aus in Taschen eines Käfigs (15) untergebrachten federbelasteten Klemmrollen, die den Klemmrampen zugeordnet sind, der durch relatives Verdrehen zwischen dem Käfig (15) und dem Klemmring (16) aus einer ersten in eine zweite Schaltstellung umschaltbar ist, wobei durch eine axiale Verschiebung eines gewindeartig eingreifenden Schaltgliedes eine Rotationsbewegung zwischen dem Käfig und dem Klemmring erzeugt wird, **dadurch gekennzeichnet**, daß der Käfig (15) axial unverschiebbar im Klemmring (16) eingesetzt ist, das zwischen dem Käfig und dem Klemmring (16) ein konzentrisch zu beiden Bauteilen angeordnetes, hülsenförmiges Zwischenglied (17) vorgesehen ist, wobei der Käfig (15) mit dem Zwischenglied (17) gewindeartig und das Zwischenglied (17) mit dem Klemmring (16) im Sinne einer Längsführung ineinandergreifen, und daß eine Axialverschiebung des Zwischengliedes (17) eine Rotationsbewegung des Käfigs (15) gegenüber dem Klemmring (16) auslöst.

3. Freilauf nach Anspruch 1, **dadurch gekennzeichnet**, daß der Käfig (3) in dem Klemmring (1), der an beiden Enden radial gerichtete Borde (7, 8) besitzt, axial verschiebbar gelagert ist, wobei zwischen dem einen Klemmringbord (7) und einer Käfigstirnfläche (9) eine axial wirkende Druckfeder (10) angeordnet ist, während an der gegenüberliegenden Seite ein axialer Ansatz (11) des Käfigs (3), der axial über den Klemmring (1) hinausragt, Ausnehmungen oder Vorsprünge (12) aufweist, die mit Vorsprüngen oder Ausnehmungen (13) am Klemmring (1) gewindeartig zusammenwirken.

4. Freilauf nach Anspruch 3, **dadurch gekennzeichnet**, daß der Ansatz (11) des Käfigs (3) mit wenigstens einem gewindeförmigen Vorsprung (12) versehen ist, welcher in eine Ausnehmung (13) des der Druckfeder (10) entgegengesetzten Klemmringbordes (8) formschlüssig eingreift.

5. Freilauf nach Anspruch 2, **dadurch gekennzeichnet**, daß der Käfig (15) in dem Klemmring (16) zwischen radial gerichteten Borden (22) an beiden Enden axial unverschiebbar gelagert ist, zwischen Käfig (15) und Klemmring (16) ein vorzugsweise zylindrisches, axial verschieblich gelagertes und unter Einwirkung einer Druckfeder (20) axial nach außen gedrücktes Zwischenglied (17) angeordnet ist, welches axial über den Klemmring (16) hinausragt.

6. Freilauf nach Anspruch 5, **dadurch gekennzeichnet**, daß ein axialer Ansatz (19) des Käfigs (15) mit wenigstens einem gewindeförmigen Vorsprung (23) versehen ist, welcher in einer entsprechenden Nut (24) des Zwischengliedes (17) eingreift, welches andererseits mit wenigstens einer axial verlaufenden Nut (25) versehen ist, in welcher ein Vorsprung (26) des Klemmringbordes (22) formschlüssig eingreift.

## Claims

1. Freewheel comprising a locking ring (1) provided with locking ramps (2) and spring-loaded locking rollers (5) lodged in pockets (4) of a cage (3) and associated with the locking ramps (2), the freewheel being switchable from a first switched position into a second switched position by relative rotation between the cage (3) and the locking ring (1), and a rotational movement between the cage and the locking ring being produced by an axial displacement of a switching member intervening in the manner of a screw thread, characterized in that the cage (3) and the locking ring (1) engage directly into each other by projections (12) and recesses (13), and when the cage (3) is axially displaced, it executes a movement of rotation with respect to the locking ring (1).

2. Freewheel comprising a locking ring (16) provided with locking ramps and spring-loaded locking rollers lodged in pockets of a cage (15) and associated with the locking ramps, the freewheel being switchable from a first switched position into a second switched position by relative rotation between the cage (15) and the locking ring (16), and a rotational movement between the cage and the locking ring being produced by an axial displacement of a switching member intervening in the manner of a screw thread, characterized in that the cage (15) is fitted axially immovable in the locking ring (16), between the cage and the locking ring (16) a sleeve-shaped intermediate member (17) is provided which is concentric with both these structural components, the cage (15) inter-engaging with the intermediate member (17) in the manner of a screw thread, and the intermediate member (17) inter-engaging with the locking ring (16) in the manner of a longitudinal guide, and wherein an axial displacement of the intermediate member (17) causes a rotational movement of the cage (15) with respect to the locking ring (16).

3. Freewheel according to claim 1, characterized in that the cage (3) is mounted for axial displacement in the locking ring (1) which comprises radially oriented rims (7, 8) at both ends, an axially acting compression spring (10) being arranged between the one locking ring rim (7) and a cage end face (9) while at the opposite end, an axial extension (11) of the cage (3), which projects axially beyond the locking ring (1), comprises recesses or projections (12) which cooperate in the manner of a screw thread with projections or recesses (13) of the locking ring (1).

4. Freewheel according to claim 3, characterized in that the extension (11) of the cage (3) is provided with at least one thread-shaped projection (12) which interlocks with a recess (13) of the locking ring rim (8) opposite the compression spring (10).

5. Freewheel according to claim 2, characterized in that the cage (15) is mounted axially immovable in the locking ring (16) between radially oriented rims (22) at both ends, and a preferably cylindrical intermediate member (17) mounted for axial displacement and biased axially outwards by the action of a compression spring (20) is arranged between the cage (15) and the locking ring (16) and projects axially beyond the locking ring (16).

6. Freewheel according to claim 5, characterized in that an axial lug (19) of the cage (15) is provided with at least one thread-shaped projection (23) which engages into a corresponding groove (24) of the intermediate member (17) which, on the other side, comprises at least one axially extending groove (25) with which a projection (26) of the locking ring rim (22) interlocks.

## Revendications

1. Roue libre comprenant une bague de serrage (1) munie de rampes de serrage (2), et de galets de serrage (5) chargés par ressort, logés dans des poches (4) d'une cage (3) et qui sont associés aux rampes de serrage (2), la roue libre étant commutable à partir d'une position de commutation dans une deuxième position de commutation par rotation relative entre la cage (3) et la bague de serrage (1), un mouvement de rotation entre la cage et la bague de serrage étant produit par un déplacement axial d'un organe de commutation qui intervient à la manière d'un filetage, caractérisée en ce que la cage (3) et la bague de serrage (1) s'engagent directement l'un dans l'autre par des saillies (12) et des évidements (13), et en ce que, lors d'un déplacement axial de la cage (3), celle-ci exécute un mouvement de rotation par rapport à la bague de serrage (1).

2. Roue libre comprenant une bague de serrage (16) munie de rampes de serrage et de galets de serrage chargés par ressort, logés dans des poches d'une cage (15) et qui sont associés aux rampes de serrage, la roue libre étant commutable à partir d'une position de commutation dans une deuxième position de commutation par rotation relative entre la cage (15) et la bague de serrage (16), un mouvement de rotation entre la cage et la bague de serrage étant produit par un déplacement axial d'un organe de commutation qui intervient à la manière d'un filetage, caractérisée en ce que la cage (15) est insérée axialement fixe dans la bague de serrage (16), qu'entre la cage et la bague de serrage (16) est prévu un organe intermédiaire (17) en forme de douille qui est agencé de manière concentrique à ces deux composants, ladite cage (15) et ledit organe intermédiaire (17) s'engageant l'un dans l'autre à la manière d'un filetage, tandis que l'organe intermédiaire (17) et la bague de serrage (16) s'engagent l'un dans l'autre au sens d'un guide longitudinal, et en ce qu'un déplacement axial de l'organe intermédiaire (17) provoque un mouvement de rotation de la cage (15) par rapport à la bague de serrage (16).

3. Roue libre selon la revendication 1, caractérisée en ce que la cage (3) est montée en déplacement longitudinal dans la bague de serrage (1) qui, à les deux extrémités, possède des rebords (7, 8) radialement orientés, un ressort de pression (10) à action axiale étant agencé entre l'un (7) des rebords de la bague de serrage et une face frontale (9) de la cage tandis que, du côté opposé, un embout axial (11) de la cage (3) qui fait axialement saillie au-delà de la bague de serrage (1), comprend des évidements ou des saillies (12) qui coopèrent à la manière d'un filetage avec des saillies ou des évidements (13) prévus sur la bague de serrage (1).

4. Roue libre selon la revendication 3, caractérisée en ce que l'embout (11) de la cage (3) comprend au moins une saillie (12) en forme de filetage qui s'engage par concordance de forme dans un évidement (13) du rebord (8) de la bague de serrage situé à l'opposé du ressort de pression (10).

5. Roue libre selon la revendication 2, caractérisée en ce que la cage (15) est montée axialement fixe dans la bague de serrage (16) entre des rebords (22) qui sont radialement orientés et prévus sur les deux extrémités, et en ce qu'entre la cage (15) et la bague de serrage (16) est agencé un organe intermédiaire (17), de préférence, de forme cylindrique, qui est monté en déplacement axial et sollicité axialement vers l'extérieur par l'action d'un ressort de pression (20), ledit organe intermédiaire (17) faisant axialement saillie au-delà de la bague de serrage (16).

6. Roue libre selon la revendication 5, caractérisée en ce qu'un embout axial (19) de la cage (15) est muni d'au moins une saillie (23) en forme de filetage, qui s'engage dans une rainure (24) correspondante de l'organe intermédiaire (17), celui-ci comprenant, de l'autre côté, au moins une rainure (25) qui s'étend axialement et dans laquelle s'engage par concordance de forme une saillie (26) du rebord (22) de la bague de serrage.
